# EUROPEAN PATENT SPECIFICATION

(11) **EP 2 792 192 B1**
(45) Date of publication and mention of the grant of the patent: **16.10.2019**
(21) Application number: 13708312.7
(22) Date of filing: 21.02.2013
(51) Int. Cl.: H04W 36/14, H04W 36/00, H04W 36/30, H04W 88/06

(54) **SEAMLESS TRANSITION OF A CELLULAR TELEPHONE FROM CELLULAR TO WI-FI COMMUNICATION**
NAHTLOSER ÜBERGANG EINES MOBILTELEFONS VON MOBIL- ZU WI-FI-KOMMUNIKATION
TRANSITION SANS SOLUTION DE CONTINUITÉ D'UN TÉLÉPHONE CELLULAIRE DE LA COMMUNICATION CELLULAIRE À LA COMMUNICATION WI-FI

(30) Priority: 29.02.2012 US 201261604671 P; 20.02.2013 US 201313771424
(43) Date of publication of application: 22.10.2014
(73) Proprietor: Apple Inc., Cupertino CA 95014 (US)
(72) Inventor: CHHABRA, Kapil, Cupertino, CA 95014 (US); THOMAS, Tito, San Jose, California 95120 (US)
(74) Representative: Withers & Rogers
(86) International application number: PCT/US2013/027147
(87) International publication number: WO 2013/130336

(56) References cited:
- WO-A1-2010/054843
- WO-A2-03/081828
- US-A1- 2004 205 158
- US-A1- 2005 197 156

## Description

### BACKGROUND

### Field

The described embodiments relate to electronic devices. More specifically, the described embodiments relate to wireless communication between electronic devices.

### Related Art

Modern electronic devices often communicate with each other using wireless networks. For example, a typical cellular telephone communicates with other cellular telephones in a cellular-telephone network using a cellular network interface *(UMTS, LTE,* etc.).

However, there are often circumstances where the performance of a cellular-telephone network is constrained or degraded. For example, when large numbers of users are aggregated in a small region, such as a sports stadium, a cellular-telephone network can easily become overloaded, which may degrade the cellular service and, thus, customer satisfaction with a provider of the cellular service.

A method of selecting a communication network for a dual mode mobile communication terminal is known from US 2005/0197156A1. This method consists in the mobile terminal listening to a chosen signalling channel of its parent cellular communication network on which is transmitted, in a chosen mode, information data on access points to at least one wireless local area network, accessible in the cell in which the mobile terminal is situated, and in selecting one of the accessible access points as a function of at least one chosen selection criterion, so that the mobile terminal can communication with a remote communication terminal via the selected access point, given the transmitted information data, if the latter is more suitable for the communication than the cellular network. Further, from WO 2010/054843A1, a method and system for accessing private and/or commercially owned wireless access points is known, wherein a user has a subscription with a mobile network operator and wherein a mobile terminal of said user has established a radio connection in security association to said mobile network operator's macro network. The mobile network operator's macro network is used to negotiate and/or transfer access credentials and/or authorisation data between the mobile terminal and the wireless access points on demand.

### SUMMARY

The invention is defined by the subject-matter of the independent claims.

Preferred embodiments are set out in the dependent claims.

The described embodiments include an electronic device that wirelessly communicates with another electronic device and a computer system (or server) that provides communication service to the electronic device. During operation, the computer system determines an approximate location of the electronic device (such as a cellular telephone) based on communication with the electronic device via a cellular-telephone network. If the cellular-telephone network performance is constrained or degraded, the computer system provides a list of available networks and associated access credentials to the electronic device via the cellular-telephone network, where the available networks are other than the cellular-telephone network and use a communication technique other than a cellular-telephone communication technique. For example, the communication technique may include an Institute of Electrical and Electronics Engineers (*IEEE*) 802.11 protocol. Then, the computer system receives a selection of a network from the available networks from the electronic device via the cellular-telephone network. Next, the computer system transitions communication with the electronic device from the cellular-telephone network to the selected network.

Preferably, the computer system provides a message to a user of the electronic device requesting that the user select one of the available networks. Therefore, the computer system and/or the electronic device may perform these actions with or without action by the user of the electronic device.

Note that the available networks may be associated with an organization other than a provider of the cellular-telephone network. For example, the available networks may include Wi-Fi™ hotspots.

In an example, the computer system looks up, based on the approximate location, the list of available networks and the associated credentials.

Another example provides a method that includes at least some of the operations performed by the computer system.

The operations performed by the computer system may be implemented in hardware and/or software. For example, at least some of the operations may be performed by a communication-management system in the computer system. Alternatively or additionally, another embodiment provides a computer-program product for use with the computer system. This computer-program product includes instructions for at least some of the operations performed by the computer system.

In the described embodiments, the electronic device selects a network (such as one of the available networks). In particular, during operation the electronic device communicates via a cellular-telephone network. Then, the electronic device receives the list of available networks and associated access credentials via the cellular-telephone network, where the available networks are other than the cellular-telephone network and use the communication technique other than the cellular-telephone communication technique. The electronic device selects the network from the available networks based on a communication criterion, where the communication criterion includes: proximity to the electronic device, a signal strength, security, and/or communication quality. Moreover, the electronic device provides information specifying the selected network via the cellular-telephone network. Next, the electronic device receives instructions that transition communication with the electronic device from the cellular-telephone network to the selected network.

Preferably, the electronic device receives the message to the user of the electronic device requesting that the user select one of the available networks.

Another example provides a method that includes at least some of the operations performed by the electronic device.

The operations performed by the electronic device may be implemented in hardware and/or software. For example, at least some of the operations may be performed by a networking subsystem in the electronic device. Alternatively or additionally, another embodiment provides a computer-program product for use with the electronic device. This computer-program product includes instructions for at least some of the operations performed by the electronic device.

### BRIEF DESCRIPTION OF THE FIGURES

FIG. 1 presents a block diagram illustrating a system that includes a group of electronic devices wirelessly communicating in accordance with an embodiment of the present disclosure.
FIG. 2 presents a flowchart illustrating a process for providing communication services and/or selecting a network in the system of FIG. 1 in accordance with an embodiment of the present disclosure.
FIG. 3 presents a block diagram illustrating a computer system in FIG. 1 in accordance with an embodiment of the present disclosure.
FIG. 4 presents a block diagram illustrating an electronic device in FIG. 1 in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

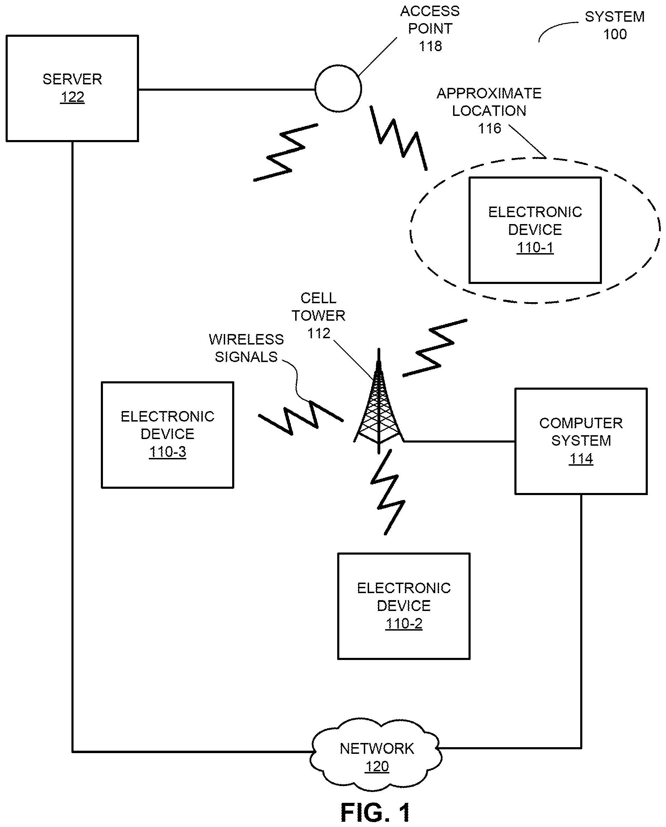

FIG. 1 presents a block diagram illustrating a system 100 that includes a group of electronic devices 110 wirelessly communicating. In particular, electronic devices 110 (such as cellular telephones) communicate information with each other via a cellular-telephone network. Based on the communication between electronic devices 110 and one or more cell towers associated with one or more cells in the cellular-telephone network (such as cell tower 112), computer system (such as a server) 114 (and, more generally, a communication-management system) may determine an approximate location 116 of at least one of electronic devices 110 (such as electronic device 110-1). For example, approximate location 116 may be determined based on: a current cell tower, a current cell identifier, a current city name, etc.

Subsequently, if the performance of the cellular-telephone network is constrained or degraded (for example, if there is insufficient bandwidth or capacity, there may be a large number of dropped calls, etc.), computer system 114 provides a list of available networks and associated access credentials (such as passwords, addressing information and/or channel information that will allow electronic device 110-1 to connect to the networks) to electronic device 110-1 via the cellular-telephone network. For example, based on approximate location 116, computer system 114 may look up the list of available networks and the associated credentials, and may communicate this information to electronic device 110-1.

Note that the available networks may be other than the cellular-telephone network, and may use a communication technique other than a cellular-telephone communication technique. For example, the communication technique may include a wireless local area network, such as an *IEEE* 802.11 protocol or standard. More generally, the communication technique may be used in a so-called 'infrastructure network' that is usually identified by a name (such as a service set identifier or *SSID*), and which includes access points (such as access point 118), which are typically at fixed locations and are often coupled to the Internet. After discovering and connecting to an infrastructure network, electronic devices can communicate with each other via an access point (for example, each packet, encapsulated in a frame, which is sent from electronic device *A* to electronic device *B* may pass through access point 118). However, a wide variety of communication techniques may be used, such as a peer-to-peer link, which is typically not connected to the Internet, and in which there is no network name (indeed, there may not be a 'network' per se, and electronic devices can participate or leave a peer-to-peer link seamlessly). In a peer-to-peer link, electronic devices communicate directly (*i.e.,* packets are not retransmitted). Therefore, in a peer-to-peer link the communication does not occur via access point 118 or another of electronic devices 110. Examples of a peer-to-peer link include: Apple Wireless Direct Link or *AWDL* (from Apple Inc. of Cupertino, California) and Bluetooth™ (from the Bluetooth Special Interest Group of Kirkland, Washington).

In the discussion that follows, Wi-Fi™ (from the Wi-Fi Alliance of Austin, Texas) is used as an illustrative example of the communication technique. Therefore, the available networks may include Wi-Fi™ hotspots. Moreover, the available networks may be associated with one or more organizations other than a provider of the cellular-telephone network.

After providing the list of available networks and the associated credentials, computer system 114 receives a selection of a network from the available networks (or information specifying the selection) from electronic device 110-1 via the cellular-telephone network. This selection may be performed with or without action by a user of the electronic device 110-1 (*i.e.,* the selection may be passive or 'actively enabled' by user action). For example, electronic device 110-1 may automatically make the selection in response to receiving the list of available networks and associated access credentials from computer system 114. Alternatively, in some embodiments computer system 114 provides, via the cellular-telephone network, a message to the user of electronic device 110-1 requesting that the user select one of the available networks. This message may be displayed on electronic device 110-1, and the user's selection may be provided by electronic device 110-1 to computer system 114 via the cellular-telephone network. In either case, the selection of the network from the available networks may be based on a communication criterion, such as: proximity to electronic device 110-1 (for example, an access point or an antenna associated with the selected network may be within 20 m of electronic device 110-1), a signal strength, security of the available networks, and/or communication quality (such as a latency, an error rate, a retransmission rate, etc.).

Next, computer system 114 transitions communication with electronic device 110-1 from the cellular-telephone network to the selected network. For example, via the cellular-telephone network, computer system 114 may provide instructions to electronic device 110-1 that transition communication with electronic device 110-1 from the cellular-telephone network to the selected network. These instructions may indicate that electronic device 110-1 should use the credentials associated with the selected network to access the selected network. After electronic device 110-1 has successfully accessed the selected network, electronic device 110-1 may provide a handoff message to computer system 114 via the cellular-telephone network and/or the selected network. Alternatively or additionally, computer system 114 may instruct, via network 120 (such as the Internet), a server 122 operated by the organization associated with the selected network to connect and provide service to electronic device 110-1.

In this way, this technique for transitioning service can provide continuity of performance to the user of electronic device 110-1. Moreover, the transition from cellular-telephone network to the selected network may be seamless, so the user does not lose service, experience a dropped call or have degraded communication.

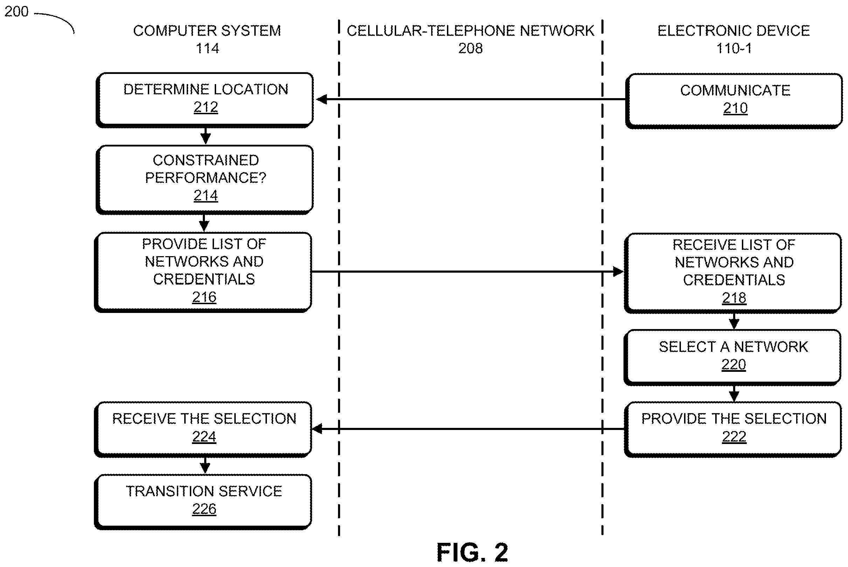

We now further describe the technique for transitioning service. FIG. 2 presents a flowchart illustrating a process 200 for providing communication services and/or selecting a network in system 100 (FIG. 1). During this process, computer system 114 determines an approximate location (operation 212) of electronic device 110-1 based on communication via a cellular-telephone network 208 (operation 210). If computer system 114 determines that the performance of cellular-telephone network 208 is constrained or degraded (operation 214), computer system provides (operation 216) and electronic device 110-1 receives (operation 218) a list of available networks and associated access credentials via cellular-telephone network 208. In some embodiments, computer system 114 provides a message to the user of electronic device 110-1 requesting that the user select one of the available networks.

Then, electronic device 110-1 selects a network from the available networks (operation 220), for example, based on a communication criterion. Moreover, electronic device 110-1 provides (operation 222) and computer system 114 receives (operation 224) the selection via cellular-telephone network 208. In response to the selection, computer system 114 transitions communication with electronic device 110-1 from cellular-telephone network 208 to the selected network (operation 226). This may include providing instructions to electronic device 110-1 that transition communication with electronic device 110-1 from cellular-telephone network 208 to the selected network.

In some embodiments of process 200, there may be additional or fewer operations. Moreover, the order of the operations may be changed, and/or two or more operations may be combined into a single operation.

In an exemplary embodiment, the technique for transferring service is used to provide a user experience when transitioning to or from a Wi-Fi™ network that is similar to that found with cellular telephones. In particular, when a user uses a cellular telephone, service is transferred smoothly as the user moves from cell to cell. In the context of the preceding discussion, the cellular-telephone network can be used to establish a connection to a Wi-Fi™ network, and in the process some of the workload in the cellular-telephone network can be offloaded. This approach may allow the lower-power, higher-bandwidth Wi-Fi™ network to supplement or replace the service offered by the cellular-telephone network. Because the Wi-Fi™ network has a shorter range, tracking of the user location and providing a section capability in the electronic device (based on the communication criterion) may allow the preferred or best network at a given time and/or location to be selected by the electronic device and/or the user of the electronic device.

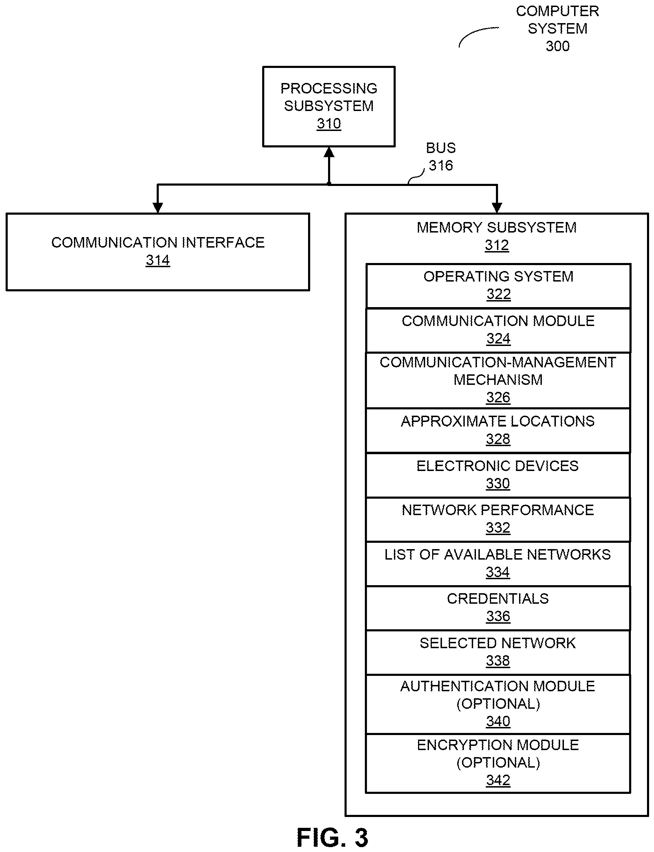

We now further describe the computer system and the electronic devices. FIG. 3 presents a block diagram illustrating a computer system 300, such as computer system 114 in FIG. 1. Computer system 300 may include processing subsystem 310, memory subsystem 312, and a communication interface 314.

Processing subsystem 310 may include one or more devices that perform computational operations. For example, processing subsystem 310 can include one or more microprocessors, application-specific integrated circuits (*ASICs*), microcontrollers, and/or programmable-logic devices. Processing subsystem 310 may execute an operating system 322 (stored in memory subsystem 312) that includes procedures (or a set of instructions) for handling various basic system services for performing hardware-dependent tasks.

Memory subsystem 312 may include one or more devices for storing data and/or instructions for processing subsystem 310 and communication interface 314. For example, memory subsystem 312 can include dynamic random access memory (*DRAM*), static random access memory (*SRAM*), and/or other types of memory. (More generally, memory subsystem 312 may include volatile memory and/or non-volatile memory that are configured to store information.) In addition, memory subsystem 312 can include mechanisms for controlling access to the memory. In some embodiments, memory subsystem 312 includes a memory hierarchy that comprises one or more caches coupled to a memory in computer system 300. Alternatively or additionally, in some of these embodiments one or more of the caches is located in processing subsystem 310.

Moreover, memory subsystem 312 may be coupled to one or more high-capacity mass-storage devices (not shown). For example, memory subsystem 312 can be coupled to a magnetic or optical drive, a solid-state drive, or another type of mass-storage device. In these embodiments, memory subsystem 312 can be used by computer system 300 as fast-access storage for often-used data, while the mass-storage device may be used to store less frequently used data.

Communication interface 314 may include one or more devices that couple to and communicate on a network (*e.g.,* that perform network operations). This network may include: the Internet, World Wide Web (*WWW*), an intranet, a cellular-telephone network, *LAN, WAN, MAN,* or a combination of networks, or other technology enabling communication between computing systems. In some embodiments, communication interface 314 provides a persistent communication connection.

Within computer system 300, processing subsystem 310, memory subsystem 312, and communication interface 314 may be coupled together using bus 316. Bus 316 may be an electrical, optical, or electro-optical connection that the subsystems can use to communicate commands and data among one another. Although only one bus 316 is shown for clarity, different embodiments can include a different number or configuration of electrical, optical, or electro-optical connections among the subsystems.

Computer system 300 may include: a personal or desktop computer, a laptop computer, a server, a work station, a client computer (in a client-server architecture), a piece of testing equipment, and/or another electronic device. In this discussion, a 'computer' or 'computer system' includes one or more electronic devices (at the same or remote locations) that are capable of manipulating computer-readable data or communicating such data between two or more computer systems over a network.

Although we use specific components to describe computer system 300, in alternative embodiments, different components and/or subsystems may be present in computer system 300. For example, computer system 300 may include one or more additional processing subsystems 310, memory subsystems 312, and/or communication interfaces 314. Additionally, one or more of the subsystems may not be present in computer system 300. Moreover, in some embodiments, computer system 300 may include one or more additional subsystems that are not shown in FIG. 3. Also, although separate subsystems are shown in FIG. 3, in some embodiments, some or all of a given subsystem can be integrated into one or more of the other subsystems in computer system 300 and/or positions of components in computer system 300 can be changed.

While the technique for transferring service may be implemented in hardware and/or software, in other embodiments at least some of the operations in the technique are performed by one or more programs modules or sets of instructions (such as communication module 324 stored in memory subsystem 312), which may be executed by processing subsystem 310. The one or more computer programs may constitute a computer-program mechanism. Furthermore, instructions in the various modules in memory subsystem 312 may be implemented in: a high-level procedural language, an object-oriented programming language, and/or in an assembly or machine language. Note that the programming language may be compiled or interpreted, *e.g.,* configurable or configured, to be executed by processing subsystem 310.

As discussed previously, communication interface 314 and communication module 324 may allow computer system 300 to interact with a cellular-telephone network (including one or more base stations and cell towers). Using the communicated information, communication-management system or mechanism 326 may: track approximate locations 328 of electronic devices 330; monitor network performance 332; maintain a list of available networks 334 and associated credentials 336; provide list of available networks 334 and associated credentials 336 to one or more of electronic devices 330, as needed, based on network performance 332; receive a selected network 338 from at least one of electronic devices 330; and provide instructions transitioning service from a cellular-telephone network to selected network 338.

In some embodiments, optional authentication module 340 may authenticate at least the one of electronic devices 330 and/or a user of at least the one of electronic devices 330 before providing the list of available networks 334 and the associated credentials 336. For example, the authenticating may involve: receiving an identifier of at least the one of electronic devices 330 (such as a serial number that indicates the electronic device is owned by a trusted user), receiving a digital certificate from at least the one of electronic devices 330 (such as a certificate from a third party that indicates the electronic device can be trusted to access one of the available networks 334), receiving an access code from at least the one of electronic devices 330 (such as a personal identification number or *PIN*), and/or receiving a response from at least the one of electronic devices 330 to a challenge provided by computer system 300 (such as a security question).

Furthermore, in some embodiments communication with at least the one of electronic devices 330 is encrypted by optional encryption module 342 (for example, using an encryption key).

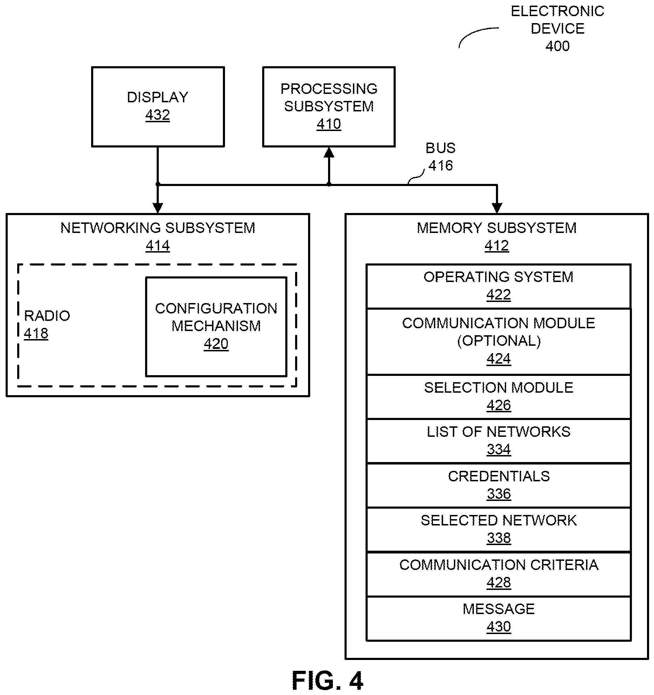

FIG. 4 presents a block diagram illustrating an electronic device 400, such as one of electronic devices 110 in FIG. 1. Electronic device 400 may include processing subsystem 410, memory subsystem 412, and networking subsystem 414.

Processing subsystem 410 may include one or more devices that perform computational operations. For example, processing subsystem 410 can include one or more microprocessors, application-specific integrated circuits (*ASICs*), microcontrollers, and/or programmable-logic devices. Processing subsystem 410 may execute an operating system 422 (stored in memory subsystem 412) that includes procedures (or a set of instructions) for handling various basic system services for performing hardware-dependent tasks.

Memory subsystem 412 may include one or more devices for storing data and/or instructions for processing subsystem 410 and networking subsystem 414. For example, memory subsystem 412 can include dynamic random access memory (*DRAM*), static random access memory (*SRAM*), and/or other types of memory. (More generally, memory subsystem 412 may include volatile memory and/or non-volatile memory that are configured to store information.) In addition, memory subsystem 412 can include mechanisms for controlling access to the memory. In some embodiments, memory subsystem 412 includes a memory hierarchy that comprises one or more caches coupled to a memory in electronic device 400. Alternatively or additionally, in some of these embodiments one or more of the caches is located in processing subsystem 410.

Moreover, memory subsystem 412 may be coupled to one or more high-capacity mass-storage devices (not shown). For example, memory subsystem 412 can be coupled to a magnetic or optical drive, a solid-state drive, or another type of mass-storage device. In these embodiments, memory subsystem 412 can be used by electronic device 400 as fast-access storage for often-used data, while the mass-storage device may be used to store less frequently used data.

Networking subsystem 414 may include one or more devices that couple to and communicate on a wired and/or wireless network (*e.g*., that perform network operations). For example, networking subsystem 414 can include: a Bluetooth™ networking system, a cellular networking system (*e.g.,* a 3G/4G network such as *UMTS, LTE,* etc.), a universal serial bus (*USB*) networking system, a networking system based on the standards described in *IEEE* 802.11 (*e.g.,* a Wi-Fi™ networking system), an Ethernet or *IEEE* 802.3 networking system, and/or another networking system.

Networking subsystem 414 may include processors, controllers, radios/antennas, sockets/plugs, and/or other devices used for coupling to, communicating on, and handling data and events for each supported networking system. In the following description, we refer to the mechanisms used for coupling to, communicating on, and handling data and events on the network for each network system collectively as the 'interface' or 'network interface' for the network system. Note that in some embodiments, a 'network' between the devices does not yet exist. Therefore, electronic device 400 may use the mechanisms in networking subsystem 414 for performing simple wireless communication between the electronic devices, *e.g.,* transmitting packets or frames and receiving packets transmitted by other electronic devices via a peer-to-peer link.

Within electronic device 400, processing subsystem 410, memory subsystem 412, and networking subsystem 414 may be coupled together using bus 416. Bus 416 may be an electrical, optical, or electro-optical connection that the subsystems can use to communicate commands and data among one another. Although only one bus 416 is shown for clarity, different embodiments can include a different number or configuration of electrical, optical, or electro-optical connections among the subsystems.

Electronic device 400 can be (or can be included in) any device with at least one network interface. For example, electronic device 400 can be (or can be included in): a personal or desktop computer, a laptop computer, a server, a work station, a client computer (in a client-server architecture), a media player (such as an *MP3* player), an appliance, a subnotebook/netbook, a tablet computer, a smartphone, a cellular telephone, a piece of testing equipment, a network appliance, a set-top box, a personal digital assistant (*PDA*), a toy, a controller, a digital signal processor, a game console, a device controller, a computational engine within an appliance, a consumer-electronic device (such as a television), a portable computing device or a portable electronic device, a personal organizer, and/or another electronic device. In this discussion, a 'computer' or 'computer system' includes one or more electronic devices that are capable of manipulating computer-readable data or communicating such data between two or more computer systems over a network.

Although we use specific components to describe electronic device 400, in alternative embodiments, different components and/or subsystems may be present in electronic device 400. For example, electronic device 400 may include one or more additional processing subsystems 410, memory subsystems 412, and/or networking subsystems 414. Additionally, one or more of the subsystems may not be present in electronic device 400. Moreover, in some embodiments, electronic device 400 may include one or more additional subsystems that are not shown in FIG. 4. For example, electronic device 400 can include, but is not limited to: a display subsystem for displaying information on a display, a data collection subsystem, an audio and/or video subsystem, an alarm subsystem, a media processing subsystem, and/or an input/output (*I*/*O*) subsystem. Also, although separate subsystems are shown in FIG. 4, in some embodiments, some or all of a given subsystem can be integrated into one or more of the other subsystems in electronic device 400 and/or positions of components in electronic device 400 can be changed.

We now further describe networking subsystem 414. As illustrated in FIG. 4, networking subsystem 414 may include radio 418 and configuration mechanism 420. Radio 418 may include hardware and/or software mechanisms that are used for transmitting wireless signals from electronic device 400 and receiving signals at electronic device 400 from other electronic devices. Aside from the mechanisms herein described, radios, such as radio 418, are generally known in the art and hence are not described in detail.

Although networking subsystem 414 can include any number of radios 418, embodiments with one radio 418 are herein described. Note, however, that the radios 418 in multiple-radio embodiments function in a similar way to the described single-radio embodiments.

Configuration mechanism 420 in radio 418 may include one or more hardware and/or software mechanisms used to configure the radio to transmit and/or receive on a given channel (*e.g.,* a given carrier frequency). For example, in some embodiments the configuration mechanism 420 can be used to switch radio 418 from monitoring and/or transmitting on a given channel in the 2.4 GHz and 5 GHz band of channels described in the *IEEE* 802.11 specification to monitoring and/or transmitting on a different channel. (Note that 'monitoring' as used herein comprises receiving signals from other electronic devices and possibly performing one or more processing steps on the received signals, *e.g.,* determining if the received signal comprises a frame with a message or a request, etc.)

Networking subsystem 414 may enable electronic device 400 to wirelessly communicate with another electronic device. This can comprise transmitting (*e.g.,* multicasting) advertising frames in packets on wireless channels to enable electronic devices to make initial contact, followed by exchanging subsequent data/management frames (perhaps based on the information in the initially multicast advertising frames) to establish and/or join an existing wireless network (such as an infrastructure network), establish a communication session (*e.g.,* a Transmission Control Protocol/Internet Protocol session, etc.), configure security options (*e.g.,* Internet Protocol Security), and/or exchange data/management frames for other reasons. Note that an advertising frame may include information that enables electronic device 400 to determine one or more properties of another electronic device. Using the information, electronic device 400 can determine at least how/when to communicate with the other electronic device. Similarly, a data/management frame may communicate to the other electronic device at least how/when to communicate with electronic device 400.

Additionally, networking subsystem 414 may enable electronic device 400 to wirelessly communicate with another electronic device using a peer-to-peer link, such as *AWDL. A WDL* is an ad-hoc peer-to-peer protocol that allows peer-to-peer multicast and unicast data-frame exchanges, which can be integrated with higher-level protocols such as a zero configuration networking standard in order to perform peer and service discovery. Moreover, *A WDL* provides a synchronization mechanism that makes use of periodic synchronization frames that are transmitted by a subset of *A WDL* electronic devices. The synchronization mechanism may provide time synchronization (so that *A WDL* electronic devices periodically rendezvous during a window of time or an 'availability window' during which they must be ready to receive broadcast and unicast data frames) and channel synchronization (which allows *A WDL* electronic devices to converge on a common channel and during a common period of time, *i.e.,* the availability window).

In the described embodiments, processing a frame (and, more generally, a payload) in electronic device 400 involves: receiving wireless signals with the encoded/included frame; decoding/extracting the frame from the received wireless signals to acquire a message or a request; and processing the frame to determine information contained in the frame. Note that a frame may include a header with communication information, such as a name of the infrastructure network (for example, an *SSID*), and a payload with data.

In some embodiments, the technique for transitioning service from a cellular-telephone network to a Wi-Fi™ network is implemented using low-level hardware, such as in a physical layer, a link layer and/or a network layer in a network architecture. For example, the technique may, at least in part, be implemented in a media access control layer. However, in other embodiments at least some of the operations in the technique are performed by one or more programs modules or sets of instructions (such as optional communication module 424 stored in memory subsystem 412), which may be executed by processing subsystem 410. (In general, the technique may be implemented more in hardware and less in software, or less in hardware and more in software, as is known in the art.) The one or more computer programs may constitute a computer-program mechanism. Furthermore, instructions in the various modules in memory subsystem 412 may be implemented in: a high-level procedural language, an object-oriented programming language, and/or in an assembly or machine language. Note that the programming language may be compiled or interpreted, *e.g.,* configurable or configured, to be executed by processing subsystem 410.

For example, as discussed previously, selection module 426 may receive a list of available networks 334 and associated credentials 336 via networking subsystem 414. Then, selection module 426 may select a network 338 based on one or more communication criteria 428, and may communicate this via networking subsystem 414. In some embodiments, selection module 426 receives a message 430 via networking subsystem 414, which is displayed on a display 432. This message may request that a user of electronic device 400 select one of available networks 334, and the user's response may specify selected network 338. To assist the user in making the selection, one or more of communication criteria 428 may also be displayed.

In the preceding description, we refer to 'some embodiments.' Note that 'some embodiments' describes a subset of all of the possible embodiments, but does not always specify the same subset of the embodiments.

Note that the described embodiments are not intended to be limited to transitioning service to existing infrastructure networks, such as the current *IEEE* 802.11 wireless channels or to the network scheme described in *IEEE* 802.11. For example, some embodiments can use the newly proposed 60 GHz band of the 802.11 specification (*i.e.,* using the *IEEE* 802.1 lad standard).

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Additionally, the discussion of the preceding embodiments is not intended to limit the present disclosure. Thus, the present disclosure is not intended to be limited to the embodiments shown.

## Claims

1. An electronic device, comprising:
a processor;
memory; and
a program module, wherein the program module is stored in the memory and configurable to be executed by the processor to select a network, the program module including:
instructions for communicating via a cellular-telephone network;
instructions for receiving, from a computer system, a list of available networks and associated access credentials via the cellular-telephone network, said receiving being based on a determination, by the computer system, that the performance of the cellular telephone network is constrained, wherein the available networks are other than the cellular-telephone network and use a communication technique other than a cellular-telephone communication technique;
instructions for selecting a network from the available networks based at least in part on a communication criterion, wherein the communication criterion includes at least one of: proximity to the electronic device, a signal strength, security, and communication quality;
instructions for providing information, to the computer system, specifying the selected network via the cellular-telephone network; and
instructions for receiving instructions, from the computer system, that transition communication with the electronic device from the cellular-telephone network to the selected network.

2. The electronic device of claim 1, wherein the electronic device includes a cellular telephone.

3. The electronic device of claims 1 or 2, wherein the program module further includes instructions for receiving a message, from the computer system, to a user of the electronic device requesting that the user select one of the available networks.

4. The electronic device of claims 1, 2, or 3, wherein the communication technique includes an IEEE 802.11 protocol.

5. The electronic device of claims 1-4, wherein the available networks are associated with an organization other than a provider of the cellular-telephone network.

6. An electronic-device-implemented method for selecting a network, comprising:
using the electronic device, communicating (210) via a cellular-telephone network;
receiving (218), from a computer system, a list of available networks and associated access credentials via the cellular-telephone network, said receiving being based on a determination, by the computer system, that the performance of the cellular telephone network is constrained,
wherein the available networks are other than the cellular-telephone network and use a communication technique other than a cellular-telephone communication technique;
selecting (220) a network from the available networks based at least in part on a communication criterion, wherein the communication criterion includes at least one of: proximity to the electronic device, a signal strength, security, and communication quality;
providing (222) information, to the computer system, specifying the selected network via the cellular-telephone network; and
receiving instructions, from the computer system, that transition communication with the electronic device from the cellular-telephone network to the selected network.

7. The method of claim 6, wherein the operations in the method occur without action by a user of the electronic device.

8. A computer system, comprising:
a processor;
memory; and
a program module, wherein the program module is stored in the memory and configurable to be executed by the processor to provide communication service to an electronic device, the program module including:
instructions for determining an approximate location of the electronic device based at least in part on communication with the electronic device via a cellular-telephone network;
in response to the cellular-telephone network performance being constrained, instructions for providing a list of available networks and associated access credentials to the electronic device via the cellular-telephone network, wherein the available networks are other than the cellular-telephone network and use a communication technique other than a cellular-telephone communication technique;
instructions for receiving a selection of a network from the list of available networks from the electronic device via the cellular-telephone network, wherein the list of available networks is based at least in part on the determined approximate location; and
instructions for transitioning communication with the electronic device from the cellular-telephone network to the selected network.

9. A computer-system-mpemente method for providing communication service to an electronic device, comprising:
determining (212) an approximate location of the electronic device based at least in part on communication with the electronic device via a cellular-telephone network;
in response to the cellular-telephone network performance being (214) constrained, providing (216)
a list of available networks and associated access credentials to the electronic device via the cellular-telephone network, wherein the available networks are other than the cellular-telephone network and use a communication technique other than a cellular-telephone communication technique;
receiving (224) a selection of a network from the list of available networks from the electronic device via the cellular-telephone network, wherein the list of available networks is based on the determined approximate location; and
transitioning (226) communication with the electronic device from the cellular-telephone network to the selected network.

10. The computer-system-implemented method of claim 9, wherein the operations in the method occur without action by a user of the electronic device.

## Patentansprüche

1. Elektronische Vorrichtung umfassend:
Einen Prozessor;
Speicher; und
ein Programmmodul, wobei das Programmmodul in dem Speicher gespeichert ist und konfiguriert ist, um von dem Prozessor ausgeführt zu werden, um ein Netz auszuwählen, das Programmmodul beinhaltend:
Anweisungen zum Kommunizieren über ein Mobiltelefonnetz;
Anweisungen zum Empfangen, von einem Computersystem, einer Liste von verfügbaren Netzen
und zugehörige Zugangsdaten über das Mobiltelefonnetz, wobei das Empfangen auf einer Bestimmung durch das Computersystem basiert, dass die Leistung des Mobiltelefonnetzes eingeschränkt ist,
wobei die verfügbaren Netze andere sind als das Mobiltelefonnetz und eine Kommunikationstechnik anders als eine Mobiltelefonkommunikationstechnik benutzen;
Anweisungen zum Auswählen eines Netzes von den verfügbaren Netzen basierend zum Teil auf einem Kommunikationskriterium, wobei das Kommunikationskriterium umfasst mindestens eines von: Nähe zur elektronischen Vorrichtung, eine Signalstärke, Sicherheit, und Kommunikationsqualität;
Anweisungen zum zur Verfügung stellen von Information zum Computersystem, die das ausgewählte Netzwerk über das Mobiltelefonnetz spezifiziert; und
Anweisungen zum Empfangen von Anweisungen von dem Computersystem, die Kommunikation mit der elektronischen Vorrichtung von dem Mobiltelefonnetz auf das ausgewählte Netz übertragen.

2. Elektronische Vorrichtung nach Anspruch 1, wobei die elektronische Vorrichtung ein Mobiltelefon beinhaltet.

3. Elektronische Vorrichtung nach Anspruch 1 oder 2, wobei das Programmmodul ferner Anweisungen zum Empfangen einer Nachricht von dem Computersystem an den Benutzer der elektronischen Vorrichtung beinhaltet, das den Benutzer auffordert, dass er eines von den verfügbaren Netzen auswählt.

4. Elektronische Vorrichtung nach Ansprüchen 1, 2 oder 3, wobei die Kommunikationstechnik ein IEEE802.11 Protokoll beinhaltet.

5. Elektronische Vorrichtung nach Ansprüchen 1 bis 4, wobei die verfügbaren Netze einer Organisation anders als ein Provider des Mobiltelefonnetzes zugehörig sind.

6. Elektronische Vorrichtung implementierte Methode zum Auswählen eines Netzes umfassend:
Benutzen der elektronischen Vorrichtung, die über ein Mobiltelefonnetz kommuniziert (210);
Empfangen (218) von einem Computersystem einer Liste von verfügbaren Netzen und zugehörigen Zugangsdaten über das Mobiltelefonnetz, wobei das Empfangen auf eine Bestimmung durch das Computersystem basiert, dass die Leistung des Mobiltelefonnetzes beschränkt ist,
wobei die verfügbaren Netze anders sind als das Mobiltelefonnetz und eine Kommunikationstechnik anders als eine Mobiltelefonkommunikationstechnik benutzen;
Auswählen (220) eines Netzes von den verfügbaren Netzen basierend auf mindestens zum Teil auf einem Kommunikationskriterium, wobei das Kommunikationskriterium umfasst mindestens eines von: Nähe der elektronischen Vorrichtung, eine Signalstärke, Sicherheit und Kommunikationsqualität;
zur Verfügung stellen (222) von Information an das Computersystem, die das ausgewählte Netzwerk über das Mobiltelefonnetz spezifiziert; und
Empfangen von Anweisungen von dem Computersystem, die Kommunikation mit der elektronischen Vorrichtung von dem Mobiltelefonnetz auf das ausgewählte Netz übertragen.

7. Verfahren nach Anspruch 6, wobei die Vorgänge in dem Verfahren ohne Handlung des Benutzers der elektronischen Vorrichtung auftreten.

8. Computersystem umfassend:
einen Prozessor;
Speicher; und
ein Programmmodul, wobei das Programmmodul in dem Speicher gespeichert ist und konfiguriert ist, um von dem Prozessor ausgeführt zu werden, um ein Netz auszuwählen, das Programmmodul beinhaltend:
Anweisungen zum Bestimmen eines ungefähren Standortes der elektronischen Vorrichtung basierend auf mindestens zum Teil auf Kommunikation mit der elektronischen Vorrichtung über ein Mobiltelefonnetz;
In Antwort darauf, wenn die Mobiltelefonnetzleistung eingeschränkt ist, Anweisungen zum zur Verfügung Stellen von verfügbaren Netzen und zugehörigen Zugangsinformationen an die elektronische Vorrichtung über das Mobiltelefonnetz, wobei die verfügbaren Netze andere sind als das Mobiltelefonnetz und eine Kommunikationstechnik anders als eine Mobiltelefonnetzkommunikation benutzen;
Anweisungen zum Empfangen einer Auswahl eines Netzes von der Liste von verfügbaren Netzen von der elektronischen Vorrichtung über das Mobiltelefonnetz, wobei die Liste von verfügbaren Netzen auf mindestens zum Teil auf den bestimmten ungefähren Standort basiert; und
Anweisungen zum Übertragen von Kommunikation mit der elektronischen Vorrichtung von dem Mobiltelefonnetz auf das ausgewählte Netz.

9. Computersystemimplementiertes Verfahren zum zur Verfügung Stellen von Kommunikationsdienstleistungen an eine elektronische Vorrichtung, umfassend:
Bestimmen (212) eines ungefähren Standortes der elektronischen Vorrichtung basierend auf mindestens zum Teil auf Kommunikation mit der elektronischen Vorrichtung über ein Mobiltelefonnetz;
In Antwort darauf, dass die Mobiltelefonnetzleistung eingeschränkt ist (214), zur Verfügung stellen (216) einer Liste von verfügbaren Netzen und zugehörigen Zugangsdaten an die elektronische Vorrichtung über das Mobiltelefonnetz, wobei die verfügbaren Netze anders sind als das Mobiltelefonnetz und eine Kommunikationstechnik anders als eine Mobiltelefonnetzkommunikationstechnik benutzen;
Empfangen (224) einer Auswahl eines Netzes von der Liste von verfügbaren Netzen von der elektronischen Vorrichtung über das Mobiltelefonnetz, wobei die Liste von verfügbaren Netzen auf den bestimmten ungefähren Standort basiert; und
Übertragen (226) von Kommunikation mit der elektronischen Vorrichtung von dem Mobiltelefonnetz auf das ausgewählte Netz.

10. Computersystemimplementiertes Verfahren nach Anspruch 9, wobei die Vorgänge in dem Verfahren ohne Handlung des Benutzers der elektronischen Vorrichtung auftreten.

## Revendications

1. Un dispositif électronique, comprenant :
un processeur ;
une mémoire ; et
un module de programme, le module de programme étant stocké dans la mémoire et étant configurable pour être exécuté par le processeur pour sélectionner un réseau, le module de programme comprenant :
des instructions pour la communication via un réseau de téléphonie cellulaire ;
des instructions pour la réception, en provenance d'un système informatique, d'une liste de réseaux disponibles et d'accréditations d'accès associées via le réseau de téléphonie cellulaire, ladite réception étant basée sur une détermination, par le système informatique, que les performances du réseau de téléphonie cellulaire sont limitées, les réseaux disponibles étant autres que le réseau de téléphonie cellulaire et utilisant une technique de communication autre qu'une technique de communication de téléphonie cellulaire ;
des instructions pour la sélection d'un réseau parmi les réseaux disponibles sur la base au moins en partie d'un critère de communication, le critère de communication comprenant au moins l'une d'entre : la proximité avec le dispositif électronique, un niveau de signal, la sécurité, et la qualité de communication ;
des instructions pour la délivrance, au système informatique, d'une information spécifiant le réseau sélectionné via le réseau de téléphonie cellulaire ; et
des instructions pour la réception d'instructions, en provenance du système informatique, de transition de la communication avec le dispositif électronique depuis le réseau de téléphonie cellulaire vers le réseau sélectionné.

2. Le dispositif électronique de la revendication 1, dans lequel le dispositif électronique comprend un téléphone cellulaire.

3. Le dispositif électronique des revendications 1 ou 2, dans lequel le module de programme comprend en outre des instructions pour la réception d'un message, en provenance du système informatique, destiné à un utilisateur du dispositif électronique requérant que l'utilisateur sélectionne l'un des réseaux disponibles.

4. Le dispositif électronique des revendications 1, 2 ou 3, dans lequel la technique de communication comprend un protocole IEEE 802.11.

5. Le dispositif électronique des revendications 1 à 4, dans lequel les réseaux disponibles sont associés à une organisation autre qu'un fournisseur du réseau de téléphonie cellulaire.

6. Un procédé implémenté par un dispositif électronique pour la sélection d'un réseau, comprenant :
en utilisant le dispositif électronique, la communication (210) via un réseau de téléphonie cellulaire ;
la réception (218), en provenance d'un système informatique, d'une liste de réseaux disponibles et d'accréditations d'accès associées via le réseau de téléphonie cellulaire, ladite réception étant basée sur une détermination, par le système informatique, que les performances du réseau de téléphonie cellulaire sont limitées, les réseaux disponibles étant autres que le réseau de téléphonie cellulaire et utilisant une technique de communication autre qu'une technique de communication de téléphonie cellulaire ;
la sélection (220) d'un réseau parmi les réseaux disponibles sur la base au moins en partie d'un critère de communication, le critère de communication comprenant au moins l'une d'entre : la proximité avec le dispositif électronique, un niveau de signal, la sécurité, et la qualité de communication ;
la délivrance (222), au système informatique, d'une information spécifiant le réseau sélectionné via le réseau de téléphonie cellulaire ; et
la réception d'instructions, en provenance du système informatique, de transition de la communication avec le dispositif électronique depuis le réseau de téléphonie cellulaire vers le réseau sélectionné.

7. Le procédé de la revendication 6, dans lequel les opérations du procédé ont lieu sans action d'un utilisateur du dispositif électronique.

8. Un système informatique, comprenant :
un processeur ;
une mémoire ; et
un module de programme, le module de programme étant stocké dans la mémoire et étant configurable pour être exécuté par le processeur pour assurer un service de communication avec un dispositif électronique, le module de programme comprenant :
des instructions pour la détermination d'un emplacement approximatif du dispositif électronique sur la base au moins en partie d'une communication avec le dispositif électronique via un réseau de téléphonie cellulaire ;
en réponse à une limitation des performances du réseau de téléphonie cellulaire, des instructions de délivrance au dispositif électronique d'une liste de réseaux disponibles et d'accréditations d'accès associées via le réseau de téléphonie cellulaire, les réseaux disponibles étant autres que le réseau de téléphonie cellulaire et utilisant une technique de communication autre qu'une technique de communication de téléphonie cellulaire ;
des instructions pour la réception d'une sélection d'un réseau dans la liste de réseaux disponibles depuis le dispositif électronique via le réseau de téléphonie cellulaire, la liste de réseaux disponibles étant basée au moins en partie sur l'emplacement approximatif déterminé ; et
des instructions pour la transition de la communication avec le dispositif électronique depuis le réseau de téléphonie cellulaire vers le réseau sélectionné.

9. Un procédé implémenté par un système informatique pour assurer un service de communication avec un dispositif électronique, comprenant :
la détermination (212) d'un emplacement approximatif du dispositif électronique sur la base au moins en partie d'une communication avec le dispositif électronique via un réseau de téléphonie cellulaire ;
en réponse à (214) une limitation des performances du réseau de téléphonie cellulaire, la délivrance (216) au dispositif électronique une liste de réseaux disponibles et d'accréditations d'accès associées via le réseau de téléphonie cellulaire, les réseaux disponibles étant autres que le réseau de téléphonie cellulaire et utilisant une technique de communication autre qu'une technique de communication de téléphonie cellulaire ;
la réception (224) d'une sélection d'un réseau dans la liste de réseaux disponibles depuis le dispositif électronique via le réseau de téléphonie cellulaire, la liste de réseaux disponibles étant basée au moins en partie sur l'emplacement approximatif déterminé ; et
la transition (226) de la communication avec le dispositif électronique depuis le réseau de téléphonie cellulaire vers le réseau sélectionné.

10. Le procédé implémenté par un système informatique de la revendication 9, dans lequel les opérations du procédé ont lieu sans action d'un utilisateur du dispositif électronique.
